# EUROPEAN PATENT APPLICATION

(11) **EP 4 052 799 A1**
(43) Date of publication of application: **07.09.2022**
(21) Application number: 19950497.8
(22) Date of filing: 11.11.2019
(51) Int. Cl.: B05B 11/00, B65D 47/20

(54) **PUMP CONTAINER**

(30) Priority: 31.10.2019 KR 20190137667
(71) Applicant: Yonwoo Co., Ltd., Incheon 22824 (KR)
(72) Inventor: KIM, Sung Sin, Incheon 22824 (KR); CHO, Hae Yong, Incheon 22824 (KR)
(74) Representative: Gulde & Partner
(86) International application number: PCT/KR2019/015233
(87) International publication number: WO 2021/085710

(57) **Abstract**

A pump container includes: a container body in which contents are accommodated; a pump unit which is coupled to the top part of the container body and ejects the contents accommodated in the container body; a head part which is coupled to the top side of the pump unit and has a contents-moving hole that causes the contents delivered from the pump unit to move upward; a button part which is coupled to the top side of the head part, operates the pump unit according to a user's press, and has a nozzle formed on one side thereof for ejecting the contents, delivered via the contents-moving hole, to the outside; and a pressure-reducing check valve which is disposed between the pump unit and the contents-moving hole and opens or closes the contents-moving hole according to a press on the button part.

## Description

### [Technical Field]

The present invention relates to a pump container, and more particularly, to a pump container that performs a pumping operation through a corrugated tube made of an elastic material.

### [Background Art]

In general, a pumping-type cosmetic container configured to discharge contents through a pumping member includes a container body in which the contents are accommodated, a pumping member that is coupled to an upper portion of the container body and performs a pumping operation, and a button member that is located above the pumping member, enables the pumping operation through pressing performed by a user, and has a nozzle through which the contents are discharged.

The pumping-type cosmetic container as described above is configured such that, when the user presses the button member, the pumping member located therebelow is operated to discharge the contents accommodated in the container body to the outside of the container body through a discharge hole. In this case, since a structure of the pumping member is complicated, manufacturing costs are high, and much time is required.

Further, since the pumping member performs a pumping operation through a spring made of a metal material, the contents can be degraded due to corrosion of the spring.

In order to solve this problem, Korean Patent Registration No. 10-0545007 "Pumping apparatus for vessel of cosmetics" has been disclosed.

The pumping apparatus according to the registered patent includes a corrugated tube (30) made of an elastic material, in which the corrugated tube (30) is contracted when a pumping head (10) is lowered, the pumping head (10) is raised by an elastic force when the downward pressing is released, an upper end of the corrugated tube (30) is coupled to a lower end of an outflow tube (12) of the pumping head (10) while sealing the outflow tube (12), and a lower end of the corrugated tube (30) is coupled to a head housing (30) including a lower valve hole (21) while sealing the head housing (30). An upper valve (50) is opened to discharge a fluid to the outside of the corrugated tube (30) only when an internal pressure of the corrugated tube (30) is higher than an internal pressure of the outflow tube (12) of the pumping head (10).

The pumping apparatus performs a pumping operation by using the corrugated tube (30) made of a rubber material instead of a spring made of a metal material according to the related art. Because the spring made of a metal is not used, the degradation of the contents due to the corrosion of the spring can be prevented.

However, in this pumping apparatus, in a place in which external pressure drops, such as inside of an aircraft in flight, since an internal pressure of a corrugated tube member is relatively higher than the external pressure, an upper valve can be opened, and thus the contents leak without a discharging operation even when stored or accommodated, that is, the contents are discharged due to the reduced pressure.

### [Disclosure]

### [Technical Problem]

The present invention is directed to providing a pump container in which a pump is implemented using a corrugated tube made of an elastic material, a separate pressure reducing check valve is installed on an upper side of the pump, and thus the sealing function can be further improved.

The technical aspects of the present invention are not limited to the aspects described above, and those skilled in the art will clearly understand other technical aspects that are not described from the following descriptions.

### [Technical Solution]

According to one embodiment of the present invention, a pump container is provided. One aspect of the present invention provides a pump container including a container body accommodating contents therein, a pump part coupled to an upper portion of the container body and configured to discharge the contents accommodated in the container body, a head part coupled to an upper portion of the pump part and having a content movement hole through which the contents transferred from the pump part move upward, a button part coupled to an upper portion of the head part, configured to operate the pump part according to a pressing performed by a user, and having a nozzle disposed on one side thereof through which the contents transferred through the content movement hole are discharged to an outside, and a pressure reducing check valve disposed between the pump part and the content movement hole and configured to open or close the content movement hole according to the pressing on the button part.

A pressing boss that protrudes toward the content movement hole is disposed on an inner surface of the button part, and wherein the pressure reducing check valve is in contact with the content movement hole to close the content movement hole, and wherein, when the button part is pressed, the pressure reducing check valve is pressed by the pressing boss to be spaced apart from the content movement hole and the content movement hole is open.

A pressing part configured to be elastically deformed according to the pressing performed by the user is disposed at an upper portion of the button part, and wherein the pressing boss protrudes from a lower surface of the pressing part and moves toward the content movement hole according to the elastic deformation of the pressing part.

A separation space between the lower surface of the pressing part and an upper surface of the head part forms a movement path through which the contents are transferred from the content movement hole to the nozzle through.

A guide boss protruding toward the pressing boss is disposed at an upper portion of the pressure reducing check valve, and wherein, when the button part is pressed, the pressing part is elastically deformed, and the pressing boss presses the guide boss.

A diameter of an end of the pressing boss that is close to the content movement hole is smaller than a diameter of the content movement hole.

The pump part may include a pump support coupled to the upper portion of the container body and having a content inlet hole formed therein to communicate with an inside of the container body, a first check valve disposed inside the pump support and configured to open or close the content inlet hole, a corrugated tube part coupled to an upper side of the first check valve, contracted or stretched according to the pressing on the button part, and having a content outlet hole through which the contents are transferred to the content movement hole, and a second check valve disposed on an upper side of the content outlet hole and configured to open or close the content outlet hole.

The head part comprises an accommodation part, and an upper portion of the corrugated tube part is inserted into the accommodation part, and wherein the pressure reducing check valve and the second check valve are arranged apart from each other inside the accommodation part and sequentially open the content movement hole and the content outlet hole, respectively, according to the pressing on the button part.

When the pressure reducing check valve is pressed by the pressing boss and the content movement hole is open, an internal pressure of the accommodation part is reduced to be lower than an internal pressure of the corrugated tube, and the second check valve opens the content outlet hole.

### [Advantageous Effects]

According to the present invention, discharge of contents is fundamentally blocked by a pressure reducing check valve regardless of a change in external pressure in normal storage and accommodation, the contents can be discharged only when a button part is pressed, and thus leakage of the contents can be effectively blocked.

Further, according to the present invention, as a single synthetic resin-based material is used without the need to use a spring made of a metal material, separation and discharge of a pump container become easier, and recyclability is improved.

### [Description of Drawings]

A brief description of each drawing is provided to fully understand the drawings cited in detailed description of the present invention.
FIG. 1 is a cross-sectional view illustrating a pump container according to one embodiment of the present invention.
FIG. 2 is an exploded sectional view illustrating the pump container according to one embodiment of the present invention.
FIGS. 3A to 3D exemplarily illustrate operation of the pump container according to one embodiment of the present invention.

### [Modes of the Invention]

Hereinafter, exemplary embodiments of the present invention will be described in detail with reference to content described in the accompanying drawings. The same reference numerals or symbols presented in each drawing indicate parts or components that perform substantially the same function. Hereinafter, for convenience of description, the up, down, left, and right directions are based on the drawings, and the scope of the present invention is not necessarily limited by the corresponding directions.

Terms including ordinal numbers such as "first" and "second" may be used to describe various components, but the components are not limited by the terms. The terms are used only for the purpose of distinguishing one component from another component. For example, without departing from the scope of the present invention, a first component may be referred to as a second component, and similarly, a second component may be referred to as a first component. The term "and/or" includes a combination of a plurality of related items or any one of the plurality of listed items.

Terms used in the present specification are used only to describe embodiments and are not intended to limit and/or restrict the present invention. Singular expressions include plural expressions unless clearly otherwise indicated in the context. It should be understood in the present specification that terms such as "include" or "have" are intended to indicate that there are features, numbers, steps, operations, components, parts, or combinations thereof that are described in the specification and do not exclude in advance the possibility of the presence or addition of one or more other features, numbers, steps, operations, components, parts, or combinations thereof.

Throughout the specification, when a first part is connected to a second part, this includes not only a case in which the first part is directly connected to the second part but also a case in which the first part is indirectly connected to the second part with a third part interposed therebetween. Further, when a part includes a component, this means that another component is not excluded but may be further included unless otherwise stated.

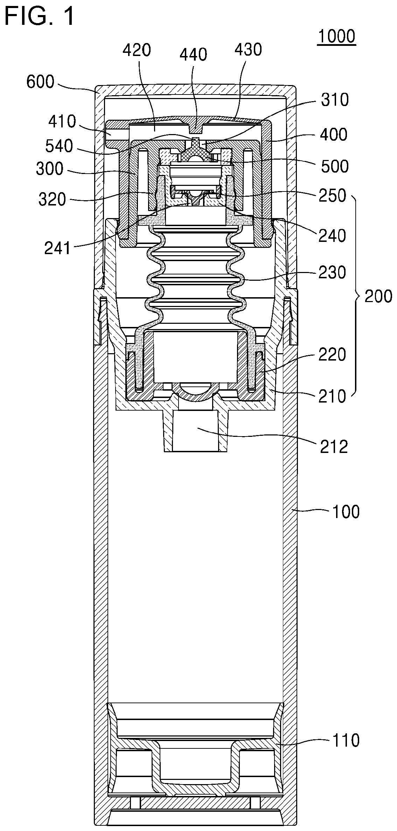

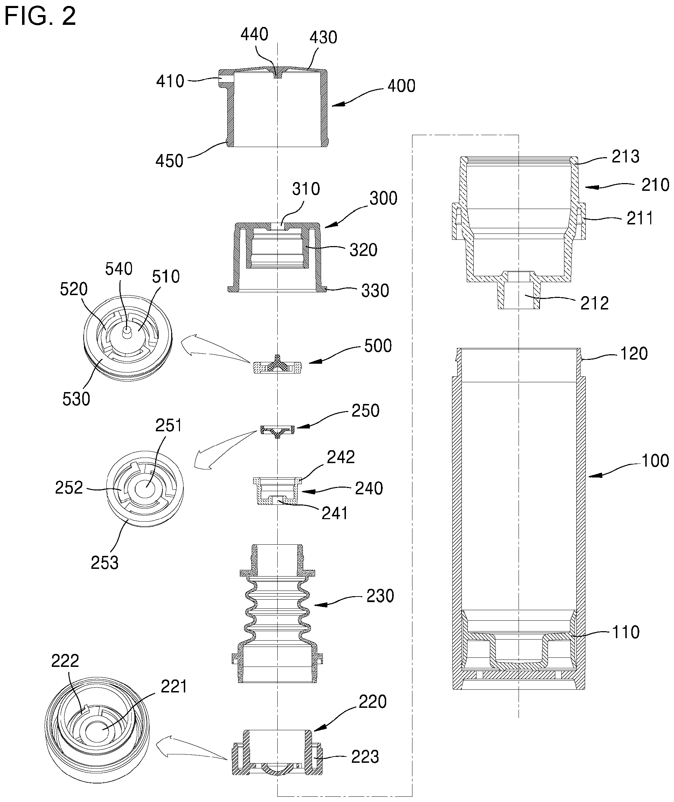

FIG. 1 is a cross-sectional view illustrating a pump container according to one embodiment of the present invention, and FIG. 2 is an exploded sectional view illustrating the pump container according to one embodiment of the present invention.

Referring to FIGS. 1 and 2, a pump container 1000 may include a container body 100, a pump part 200, a head part 300, a button part 400, a pressure reducing check valve 500, and a cap part 600.

The container body 100 may provide an accommodation space in which contents are accommodated. The contents accommodated in the container body 100 may be discharged to the outside of the container body 100 by operation of the pump part 200 and used by a user. Here, the contents may be, for example, a cosmetic (i.e., a cosmetic material) or drug, but the present invention is not limited thereto, and the contents may include various types or ingredients of materials that may be accommodated in the container body 100 and discharged through the operation of the pump part 200. The dosage forms of the contents may also be in any state such as a liquid state, a gel state, or a powder state. Further, the container body 100 is illustrated as a bottle type, but this is illustrative, and various types of the container body 100, such as a tube, may be applied.

The pump part 200 may be coupled to an upper portion of the container body 100. For coupling with the container body 100, a coupling boss 120 may be formed in an upper circumference of the container body 100.

A piston 110 that is raised according to use of the contents may be disposed inside the container body 100.

The pump part 200 may be coupled to the upper portion of the container body 100 and discharge the contents accommodated in the container body 100 according to a change in the internal pressure.

The pump part 200 may include a pump support 210, a first check valve 220, corrugated tube parts 230 and 240, and a second check valve 250.

The pump support 210 may couple the pump part 200 to the container body 100 and support the corrugated tube parts 230 and 240. For coupling with the container body 100, an edge part 211 may be formed on an outer circumferential surface of the pump part 200. The edge part 211 is fitted in the upper circumference of the container body 100, and thus the pump support 210 may be coupled to the container body 100.

A content inlet hole 212 that communicates with the inside of the container body 100 and forms a passage through which the contents flow into the pump part 200 may be formed at a central portion of the pump support 210. The content inlet hole 212 may be opened or closed by the first check valve 220.

As illustrated in FIG. 1, an upper portion of the pump support 210 may be configured to surround the head part 300 coupled to an upper portion of the pump part 200 and a lower portion of the button part 400. In one embodiment, a limitation boss 213 for limiting the rising heights of the head part 300 and the button part 400 and preventing the head part 300 and the button part 400 from being arbitrarily separated from each other may be formed to protrude inward from an upper inner circumferential surface of the pump support 210.

The first check valve 220 may be fitted in the pump support 210 and disposed above the content inlet hole 212 to open or close the content inlet hole 212.

The first check valve 220 may control the contents to flow only in one direction from the inside of the container body 100 to the inside of the corrugated tube 230 through this opening or closing operation. For example, the first check valve 220 may be implemented to open the content inlet hole 212 so that the contents flow from the container body 100 into the corrugated tube 230 only when the internal pressure of the corrugated tube 230 is lower than the internal pressure of the container body 100. To this end, the first check valve 220 may include a stopper part 221 having a shape corresponding to the content inlet hole 212 and a connection part 222 that fixes the stopper part 221 and allows the stopper part 221 to come into contact with or be spaced apart from the content inlet hole 212 through elastic deformation to open or close the content inlet hole 212.

A coupling groove 223 into which a lower portion of the corrugated tube 230 is inserted may be formed in a circumference of the first check valve 220.

The corrugated tube parts 230 and 240 may be coupled to an upper side of the first check valve 220 and suction the contents of the container body 100 thereinto or discharge the contents stored therein due to the change in the internal pressure.

In one embodiment, the corrugated tube parts 230 and 240 may include the corrugated tube 230 and a sealing part 240 that seals an upper portion thereof.

The corrugated tube 230 is made of an elastic material and may be contracted or stretched by the user applying pressure to the button part 400 or releasing the pressure from the button part 400 to change the internal pressure of the corrugated tube parts 230 and 240. The corrugated tube 230 may be configured such that a lower portion thereof is fixedly inserted into the coupling groove 223 of the first check valve 220 and an upper portion thereof is fixedly inserted into an accommodation part 320 of the head part 300. In one embodiment, the corrugated tube 230 may be made of a rubber material, but this is illustrative, and according to embodiments to which the present invention is applied, various materials capable of elastic deformation may be applied.

The sealing part 240 may be inserted into the corrugated tube 230, may be coupled to the upper portion of the corrugated tube 230, and may have a content outlet hole 241 formed through a central portion thereof to transfer the contents stored in the corrugated tube 230 to a content movement hole 310 of the head part 300. The content outlet hole 241 may be opened or closed by the second check valve 250.

A seating boss 242 seated on an upper end of the corrugated tube 230 may protrude outward along an upper circumferential surface of the sealing part 240.

Meanwhile, in FIGS. 1 and 2, the corrugated tube 230 and the sealing part 240 are illustrated as separate components, but this is illustrative, and according to embodiments to which the present invention applied, the corrugated tube 230 and the sealing part 240 may be implemented as one integrally formed component.

The second check valve 250 may be installed inside the seating part 240, may be disposed above the content outlet hole 241, and may open or close the content outlet hole 241 according to the change in the pressure inside the corrugated tube 230 and/or the accommodation part 320.

The second check valve 250 may control the contents to flow only in one direction from the inside of the corrugated tube 230 toward the accommodation part 320 or the content movement hole 310 through this opening or closing operation.

For example, the second check valve 250 may be implemented to open the content outlet hole 241 to transfer the contents from the inside of the corrugated tube 230 to the inside of the accommodation part 320 or to the content movement hole 310 only when the internal pressure of the corrugated tube 230 is greater than the internal pressure of the accommodation part 320. To this end, the second check valve 250 may include a stopper part 251 having a shape corresponding to the content outlet hole 241, a connection part 252 that fixes the stopper part 251 and allows the stopper part 251 to come into contact with or be spaced apart from the content outlet hole 241 through elastic deformation to open or close the content outlet hole 241, and a circumference part 253 that is fitted in the sealing part 240 and supports the connection part 252.

Meanwhile, although it has been described above that the pump part 200 is configured as the corrugated tube 230, this is illustrative, and according to the embodiments to which the present invention is applied, various types of pump parts may be modified and applied.

The head part 300 may be coupled to the upper portion of the pump part 200 and have the content movement hole 310 formed through a central portion thereof to transfer the contents transferred according to the operation of the pump part 200 to the upper side (that is, the inside of the button part 400 and/or a nozzle 410).

The accommodation part 320 for coupling the pump part 200 and accommodating the pressure reducing check valve 500 may be formed inside the head part 300. A lower portion of the accommodation part 320 may be open, and the content movement hole 310 may be formed in an upper central portion of the accommodation part 320.

The accommodation part 320 may be sealed by the pressure reducing check valve 500, an upper portion of the corrugated tube parts 230 and 240, and the second check valve 250. For example, in a state in which the pressure reducing check valve 500 is fitted in the accommodation part 320 through an open lower side thereof, the upper portion of the corrugated tube parts 230 and 240 to which the second check valve 250 is coupled is inserted into the accommodation part 320, and thus the inside of the accommodation part 320 may be sealed. Accordingly, the pressure reducing check valve 500 and the second check valve 250 may be arranged apart from each other vertically inside the accommodation part 320.

A seating boss on which a lower circumference of the button part 400 is seated may protrude outward along an outer circumferential surface from a lower portion of the head part 300.

The button part 400 may be coupled to an upper portion of the head part 300, may be lowered or raised together with the head part 300 by the user applying pressure to the button part 400 or releasing the pressure from the button part 400, thereby operating the pump part 200. The nozzle 410 for discharging the contents transferred through the content movement hole 310 to the outside may be formed on one side of the button part 400.

As the button part 400 and the head part 300 are coupled to each other, a movement path 420 connecting the content movement hole 310 and the nozzle 410 may be formed in an inner upper portion of the button part 400. For example, when the button part 400 and the head part 300 are coupled to each other, an inner upper surface of the button part 400 (i.e., a lower surface of a pressing part 430) and an upper surface of the head part 300 may be spaced apart from each other, and the movement path 420 through which the contents are transferred from the content movement hole 310 to the nozzle 410 may be formed through this separation space.

The pressing part 430 that is elastically deformed downward by the pressing from the user may be formed above the button part 400. In one embodiment, the pressing part 430 may be made of an elastic material such as rubber, but this is illustrative, and according to embodiments to which the present invention is applied, various materials capable of elastic deformation may be applied.

A pressing boss 440 may be formed inside the button part 400. For example, the pressing boss 440 may protrude from a lower surface of the pressing part 430 toward the content movement hole 310. When the pressing part 430 is elastically deformed downward by the pressing of the user, the pressing boss 440 moves (i.e., falls) toward the content movement hole 310, and thus the pressure reducing check valve 500 is pressed to open the content movement hole 310. In one embodiment, an end (i.e., a lower end) of the pressing boss 440 that is close to the content movement hole 310 may be configured such that an outer diameter thereof is smaller than an inner diameter of the content movement hole 310 so as not to impede the movement of the contents.

A catching boss 450 may protrude outward from a lower outer surface of the button part 400. The catching boss 450 may function to guide the elevation of the head part 300 and the button part 400, to limit the rising height of the head part 300 and the button part 400 together with the limitation boss 213 of the pump support 210, and at the same time, to prevent predetermined separation.

The pressure reducing check valve 500 may be fitted in the accommodation part 320, may be disposed between an upper end of the pump part 200 and the content movement hole 310, and may open or close the content movement hole 310 by the user applying pressure to the button part 400 or releasing the pressure from the button part 400. For example, the pressure reducing check valve 500 may close the content movement hole 310 from the lower side, may be pressed by the lower end of the pressing boss 440 to be spaced apart from the content movement hole 310 when the pressing part 430 is pressed, and thus may open the content movement hole 310.

The pressure reducing check valve 500 may include a stopper part 510 having a shape corresponding to the content movement hole 310, a connection part 520 that fixes the stopper part 510 and allows the stopper part 510 to come into contact with or be spaced apart from the content movement hole 310 through elastic deformation to open or close the content movement hole 310, and a circumference part 530 that is fitted in the accommodation part 320 and supports the connection part 520.

In one embodiment, a guide boss 540 may be further formed above the pressure reducing check valve 500. For example, the guide boss 540 may protrude from an upper surface of the stopper part 510 to face the pressing boss 440, wherein an upper end thereof passes through the content movement hole 310 to protrude to the movement path 420 of the button part 400. When the user presses the pressing part 430, the pressing boss 440 presses the guide boss 540 so that the stopper part 510 of the pressure reducing check valve 500 may be spaced apart from the content movement hole 310 more effectively.

The cap part 600 may open or close the nozzle 410 from the outside. To this end, the cap part 600 may have an open lower surface and a closed upper surface, and the lower surface may be detachably coupled to the head part 300. For coupling of the cap part 600, at least one coupling boss (not illustrated) and/or at least one coupling groove (not illustrated) may be formed on an inner circumferential surface of the cap part 600 and/or an outer circumferential surface of the head part 300.

Meanwhile, although the coupling between the components has been described above as the coupling between the bosses and the grooves or the coupling between the bosses, this is illustrative, and various coupling methods can be applied according to the embodiments. For example, the bosses and the grooves may be switched with each other or screw coupling may be applied.

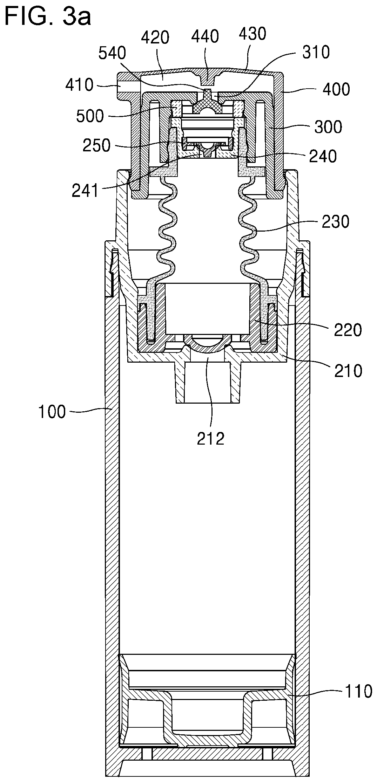

FIGS. 3A to 3D exemplarily illustrate operation of the pump container according to one embodiment of the present invention.

FIG. 3A illustrates a state before the button part 400 is pressed. In this state, the content movement hole 310 of the head part 300 may be closed by the pressure reducing check valve 500, and the content inlet hole 212 and the content outlet hole 241 of the pump part 200 may be seated by the first check valve 220 and the second check valve 250, respectively. In particular, since a state in which the content movement hole 310 is closed is maintained by the pressure reducing check valve 500, the contents may be effectively prevented from leaking to the outside in a state in which the pump container 1000 is stored or accommodated.

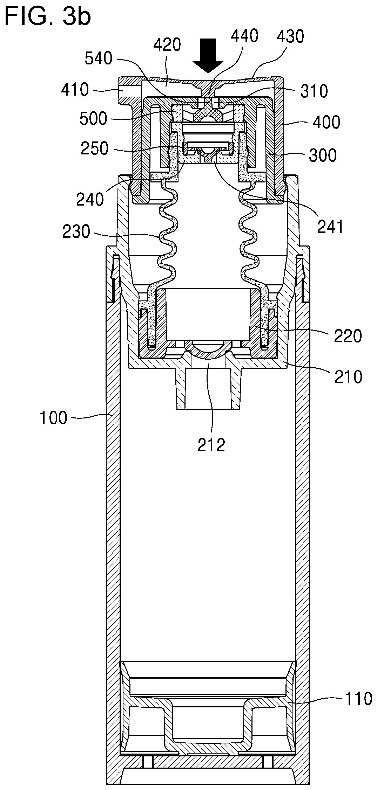

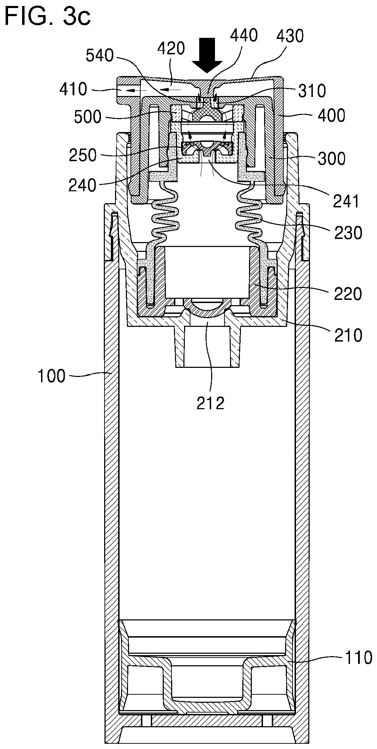

FIGS. 3B and 3C illustrate a state in which the button part 400 is pressed. First, when the user presses an upper portion of the button part 400, that is, the pressing part 430, the pressing part 430 may be elastically deformed downward to lower a lower end of the pressing boss 440 and press the guide boss 540 of the pressure reducing check valve 500. Accordingly, the stopper part 510 of the pressure reducing check valve 500 may be spaced apart from the content movement hole 310 to open the content movement hole 310.

Subsequently, when the pressing part 430 is pressed, the head part 300 may be lowered together with the button part 400, the corrugated tube 230 may be contracted, and thus the internal pressure of the corrugated tube 230 may increase. As the content movement hole 310 opens, the internal pressure of the accommodation part 320 is reduced, but the internal pressure of the corrugated tube 230 is increased. Thus, the stopper part 251 of the second check valve 250 may be spaced apart from the content outlet hole 241 due to this pressure difference. Accordingly, the content outlet hole 241 may open. Accordingly, the contents stored in the corrugated tube 230 may sequentially pass through the content outlet hole 241, the content movement hole 310, and the movement path 420 and may be discharged outward from the nozzle 410.

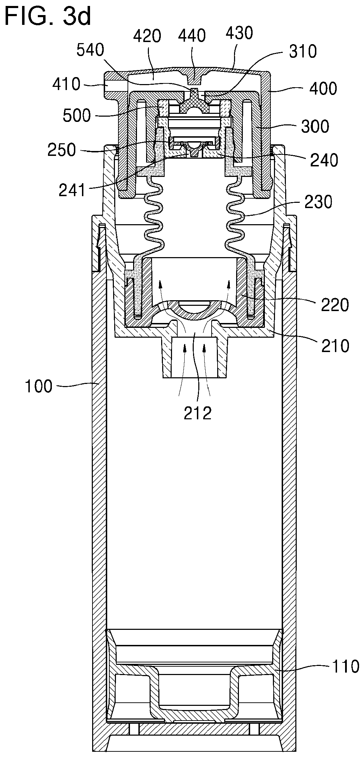

FIG. 3D illustrates a state in which the pressing on the button part 400 is released. When the user releases the pressing on the button part 400, the pressing boss 440 may be raised while the pressing part is restored by an elastic force. Accordingly, the pressure reducing check valve 500 closes the content movement hole 310 again. Further, as the contracted corrugated tube 230 is stretched to return to an original shape, the head part 300 and the button part 400 may be raised to their locations before the pressing, and the internal pressure of the corrugated tube 230 may be reduced. According to the pressure change, the second check valve 250 closes the content outlet hole 241 again. Further, since the internal pressure of the corrugated tube 230 is lower than the internal pressure of the container body 100, the stopper part 22 of the first check valve 220 may be spaced upward apart from the content inlet hole 212, the content inlet hole 212 may thus open, and the contents accommodated in the container body 100 may flow into the corrugated tube 230 through the open content inlet hole 212.

Next, when the corrugated tube 230 completely returns to its original shape, the first check valve 220 closes the content inlet hole 212 again, and thus the contents may be stored in the corrugated tube 230.

Optimal embodiments have been disclosed in the specification above and in the drawings. Although specific terms are used herein, the terms are used only for describing the present invention and are not used to limit the meaning or the scope of the present invention described in the appended claims. Therefore, it should be understood by those skilled in the art that various modifications and other equivalent embodiments are possible. Thus, the true technical scope of the present invention should be determined by the technical spirit the appended claims.

## Claims

1. A pump container comprising:
a container body accommodating contents therein;
a pump part coupled to an upper portion of the container body and configured to discharge the contents accommodated in the container body;
a head part coupled to an upper portion of the pump part and having a content movement hole through which the contents transferred from the pump part move upward;
a button part coupled to an upper portion of the head part, configured to operate the pump part according to a pressing performed by a user, and having a nozzle disposed on one side thereof through which the contents transferred through the content movement hole are discharged to an outside; and
a pressure reducing check valve disposed between the pump part and the content movement hole and configured to open or close the content movement hole according to the pressing on the button part.

2. The pump container of claim 1, wherein a pressing boss that protrudes toward the content movement hole is disposed on an inner surface of the button part, and
wherein the pressure reducing check valve is in contact with the content movement hole to close the content movement hole, and
wherein, when the button part is pressed, the pressure reducing check valve is pressed by the pressing boss to be spaced apart from the content movement hole and the content movement hole is open.

3. The pump container of claim 2, wherein a pressing part configured to be elastically deformed according to the pressing performed by the user is disposed at an upper portion of the button part, and
wherein the pressing boss protrudes from a lower surface of the pressing part and moves toward the content movement hole according to the elastic deformation of the pressing part.

4. The pump container of claim 3, wherein a separation space between the lower surface of the pressing part and an upper surface of the head part forms a movement path through which the contents are transferred from the content movement hole to the nozzle through.

5. The pump container of claim 3, wherein a guide boss protruding toward the pressing boss is disposed at an upper portion of the pressure reducing check valve, and
wherein, when the button part is pressed, the pressing part is elastically deformed, and the pressing boss presses the guide boss.

6. The pump container of claim 2, wherein a diameter of an end of the pressing boss that is close to the content movement hole is smaller than a diameter of the content movement hole.

7. The pump container of claim 2, wherein the pump part comprises:
a pump support coupled to the upper portion of the container body and having a content inlet hole formed therein to communicate with an inside of the container body;
a first check valve disposed inside the pump support and configured to open or close the content inlet hole;
a corrugated tube part coupled to an upper side of the first check valve, contracted or stretched according to the pressing on the button part, and having a content outlet hole through which the contents are transferred to the content movement hole; and
a second check valve disposed on an upper side of the content outlet hole and configured to open or close the content outlet hole.

8. The pump container of claim 7, wherein the head part comprises an accommodation part, and an upper portion of the corrugated tube part is inserted into the accommodation part, and
wherein the pressure reducing check valve and the second check valve are arranged apart from each other inside the accommodation part and sequentially open the content movement hole and the content outlet hole, respectively, according to the pressing on the button part.

9. The pump container of claim 8, wherein, when the pressure reducing check valve is pressed by the pressing boss and the content movement hole is open, an internal pressure of the accommodation part is reduced to be lower than an internal pressure of the corrugated tube, and the second check valve opens the content outlet hole.
